(19) Europäisches Patentamt
European Patent Office
Office européen des brevets

(11) EP 3 555 158 B1

(12) FASCICULE DE BREVET EUROPEEN

(45) Date de publication et mention de la délivrance du brevet:
**09.12.2020 Bulletin 2020/50**

(21) Numéro de dépôt: **17821991.1**

(22) Date de dépôt: **13.12.2017**

(51) Int Cl.:
***C08F 230/02*** *(2006.01)* ***C08F 283/06*** *(2006.01)*
***C22B 60/02*** *(2006.01)* ***C08J 9/26*** *(2006.01)*
***B01J 20/32*** *(2006.01)*

(86) Numéro de dépôt international:
**PCT/FR2017/053549**

(87) Numéro de publication internationale:
**WO 2018/109382 (21.06.2018 Gazette 2018/25)**

(54) **MATÉRIAU ORGANIQUE MÉSOPOREUX, UTILE NOTAMMENT POUR EXTRAIRE L'URANIUM(VI) DE MILIEUX AQUEUX COMPRENANT DE L'ACIDE PHOSPHORIQUE, ET SES UTILISATIONS**

MESOPORÖSES ORGANISCHES MATERIAL ZUR EXTRAKTION VON IN WÄSSRIGEN PHOSPHOSÄURELÖSUNGEN VORHANDENEM URAN

MESOPOROUS ORGANIC MATERIAL FOR RECOVERING URANIUM (VI) PRESENT IN PHOSPHORIC ACID AQUEOUS SOLUTIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **13.12.2016 FR 1662377**

(43) Date de publication de la demande:
**23.10.2019 Bulletin 2019/43**

(73) Titulaires:
- **Orano Mining**
  **92400 Courbevoie (FR)**
- **Commissariat à l'Energie Atomique et aux Energies Alternatives**
  **75015 Paris (FR)**

(72) Inventeurs:
- **CUER, Frédéric**
  **30630 Cornillon (FR)**
- **MARBET, Manon**
  **84370 Bedarrides (FR)**
- **MARIE, Cécile**
  **84000 Avignon (FR)**

(74) Mandataire: **Brevalex**
**95, rue d'Amsterdam**
**75378 Paris Cedex 8 (FR)**

(56) Documents cités:
**WO-A1-2014/127860 FR-A1- 2 990 206**

- **SIVA KESAVA RAJU ET AL: "Sequential separation of lanthanides, thorium and uranium using novel solid phase extraction method from high acidic nuclear wastes", JOURNAL OF HAZARDOUS MATERIALS, ELSEVIER, AMSTERDAM, NL, vol. 145, no. 1-2, 6 juin 2007 (2007-06-06), pages 315-322, XP022106069, ISSN: 0304-3894, DOI: 10.1016/J.JHAZMAT.2006.11.024**
- **M AKHILAMAHESWARI: "Selective enrichment of U(VI), Th(IV) and La(III) from high acidic streams using a new chelating ion-exchange polymeric matrix", TALANTA, vol. 64, no. 1, 1 septembre 2004 (2004-09-01), pages 202-209, XP055065626, ISSN: 0039-9140, DOI: 10.1016/j.talanta.2004.02.029**
- **RAPHAËL TURGIS ET AL: "Uranium Extraction from Phosphoric Acid Using Bifunctional Amido-Phosphonic Acid Ligands", SOLVENT EXTRACTION AND ION EXCHANGE., vol. 32, no. 5, 29 juillet 2014 (2014-07-29), pages 478-491, XP055223850, US ISSN: 0736-6299, DOI: 10.1080/07366299.2014.898435**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

**(Cont. page suivante)**

- NALAN KABAY ET AL: "Recovery of Uranium from Phosphoric Acid Solutions Using Chelating Ion-Exchange Resins +", INDUSTRIAL & ENGINEERING CHEMISTRY RESEARCH, vol. 37, no. 5, 1 mai 1998 (1998-05-01), pages 1983-1990, XP055111447, ISSN: 0888-5885, DOI: 10.1021/ie970518k

## Description

### DOMAINE TECHNIQUE

L'invention se rapporte au domaine de l'extraction de l'uranium(VI) de milieux aqueux comprenant de l'acide phosphorique.

Plus spécifiquement, l'invention se rapporte à un matériau organique mésoporeux qui permet d'extraire, par la technique d'extraction liquide-solide, l'uranium(VI) présent dans un milieu aqueux comprenant de l'acide phosphorique et ce, à la fois très efficacement et avec une haute sélectivité vis-à-vis du fer susceptible d'être également présent dans ce milieu.

Elle se rapporte également aux utilisations de ce matériau pour extraire l'uranium(VI) d'un milieu aqueux comprenant de l'acide phosphorique tel qu'une solution issue de l'attaque d'un phosphate naturel par de l'acide sulfurique et ce, que ce soit en vue de valoriser ultérieurement cet uranium ou pour purifier le milieu aqueux à l'égard de l'uranium alors considéré comme une impureté.

L'invention trouve notamment application dans le traitement des phosphates naturels en vue de valoriser l'uranium(VI) présent dans ces phosphates.

### ÉTAT DE LA TECHNIQUE ANTÉRIEURE

Les phosphates naturels (ou minerais de phosphate), qui sont utilisés pour la fabrication de l'acide phosphorique et d'engrais phosphatés, contiennent de l'uranium(VI) à des teneurs qui peuvent varier de quelques dizaines de ppm à plusieurs milliers de ppm ainsi que des quantités variables d'autres métaux.

L'uranium(VI) présent dans les phosphates naturels se retrouve presque intégralement dans les solutions aqueuses d'acide phosphorique qui sont issues de l'attaque sulfurique de ces phosphates. En effet, cette attaque permet de transformer le phosphate tricalcique en acide phosphorique $H_3PO_4$ à 30 % d'anhydride de phosphate $P_2O_5$, ainsi qu'en sulfate de calcium insoluble (gypse) et a pour effet de solubiliser l'uranium(VI) ainsi que divers autres métaux, en particulier le fer qui représente l'impureté métallique majoritaire.

Le potentiel de récupération de l'uranium(VI) contenu dans les phosphates naturels est de 14 000 tonnes/an, soit environ 25 % de la production annuelle actuelle d'uranium, ce qui représente une source d'approvisionnement en uranium non négligeable.

Aussi, de nombreuses équipes de recherche se sont-elles intéressées au problème de la récupération de l'uranium(VI) à partir d'une solution aqueuse d'acide phosphorique.

Pour cette récupération, cinq techniques différentes ont été proposées à ce jour, à savoir :

1°) la (co)précipitation, qui consiste à former *in situ,* c'est-à-dire dans la solution aqueuse d'acide phosphorique, des particules solides qui comprennent l'uranium(VI) que l'on cherche à récupérer, par ajout d'une espèce chimique en solution puis, après décantation et filtration, à recueillir ces particules solides ;

2°) l'extraction liquide-liquide, qui consiste à mettre la solution aqueuse d'acide phosphorique en contact avec une solution organique qui comprend un ou plusieurs extractants dans un diluant organique pour obtenir un transfert de l'uranium(VI) de la solution aqueuse vers la solution organique ;

3°) l'extraction par membrane liquide (supportée ou en émulsion), qui correspond à une évolution de l'extraction liquide-liquide et qui diffère de cette dernière en ce que la solution organique est remplacée par un film très mince d'un liquide organique à perméabilité sélective ;

4°) la flottation, qui consiste à ajouter à la solution aqueuse d'acide phosphorique un réactif chimique appelé « collecteur » propre à complexer l'uranium(VI), à laisser les complexes uranifères ainsi formés s'adsorber sur la surface de bulles de gaz générées par agitation dans un réacteur adéquate (cellule de flottation, colonne de flottation, etc) puis à récupérer lesdits complexes dans l'écume qui résulte de cette adsorption ;

5°) l'extraction liquide-solide, qui consiste à mettre la solution aqueuse d'acide phosphorique en contact avec un matériau solide, organique ou inorganique, qui est insoluble dans l'eau et qui est fonctionnalisé par des groupes chimiques capables d'extraire l'uranium(VI) de la solution aqueuse soit par échange d'ions soit par complexation.

C'est à cette cinquième technique qu'appartient l'invention.

Il existe trois modes de fonctionnalisation d'un matériau solide en vue de son utilisation en extraction liquide-solide, à savoir :

- l'imprégnation, qui consiste à mettre le matériau en contact avec une solution dans laquelle un extractant a été préalablement solubilisé puis à évaporer le solvant pour ne laisser à la surface du matériau que l'agent extractant ;
- le post-greffage, qui consiste à fixer un extractant par des liaisons covalentes à la surface du matériau postérieurement à la synthèse de celui-ci, comme, par exemple, le post-greffage qui est décrit dans la demande internationale PCT WO 2014/127860 (référence **[1]**) ou dans Siva Kesava Raju et al., Journal of Hazarodus Materials 2007, vol. 145, no.1-2, 315-322 (référence [1']); et

- la réticulation, qui consiste à polymériser un composé comprenant un motif extractant et au moins un groupe polymérisable de sorte que les groupes chimiques nécessaires à l'extraction soient inscrits au sein même de la structure du matériau.

Concernant la réticulation, elle a pour double objectif d'accroître la capacité d'échange des matériaux solides et de s'affranchir des inconvénients que présentent d'une façon générale les deux autres modes de fonctionnalisation, à savoir :

- dans le cas des matériaux fonctionnalisés par imprégnation : une faible tenue de l'agent extractant sur la surface des matériaux ;
- dans le cas des matériaux fonctionnalisés par post-greffage : une présence potentielle de groupes chimiques qui peuvent être pénalisants vis-à-vis des performances de l'extraction et qui correspondent aux groupes chimiques du type Cl, $NH_2$ ou autres n'ayant pas réagi lors de l'étape de post-greffage.

Cependant, les domaines d'application visés par le développement de matériaux fonctionnalisés par réticulation ne concernent, aujourd'hui, que très peu la récupération de l'uranium(VI) et, *a fortiori,* lorsque ce dernier est présent à faible concentration dans une solution aqueuse extrêmement complexante telle qu'une solution aqueuse d'acide phosphorique issue de l'attaque sulfurique de phosphates naturels.

Au surplus, la performance des rares matériaux fonctionnalisés par réticulation à partir de motifs phosphoriques ou phosphiniques chute drastiquement avec une diminution de leur capacité d'extraction dès que la concentration en acide phosphorique devient supérieure à 1 mol/L. Ceci les rend inadaptés à l'extraction de l'uranium(VI) de solutions aqueuses d'acide phosphorique issues de l'attaque sulfurique de phosphates naturels compte-tenu que ce type de solutions présente typiquement une concentration d'acide phosphorique supérieure à 1 mol/L et, de façon très majoritaire, égale à 5 mol/L. Une absence totale de sélectivité en faveur de cations agissant comme des acides de Lewis - ce qui est le cas du cation uranyle - est également à noter (cf., par exemple, Yamabe et al., Separation Science and Technology 2001, 36(15), 3511-3528, référence **[2] ;** Jyo et al., Journal of Applied Polymer Science 1997, 63, 1327-1334, référence **[3]**).

Or, dans le cadre de leurs travaux, les Inventeurs ont constaté que des matériaux solides mésoporeux qui sont obtenus par polymérisation réticulante de composés bifonctionnels amidophosphonates ou amidophosphoniques permettent, contrairement à ce qu'enseigne l'état de la technique, d'extraire l'uranium(VI) d'un milieu aqueux comprenant de l'acide phosphorique très efficacement et avec une haute sélectivité vis-à-vis du fer susceptible d'être présent dans cette solution et ce, même pour des concentrations d'acide phosphorique très supérieures à 1 mol/L.

Ils ont également constaté que ces matériaux présentent un pouvoir extractant considérablement plus élevé à celui de matériaux obtenus par post-greffage d'un composé bifonctionnel du même type sur un support inorganique comme décrit dans la référence **[1]**.

Et c'est sur ces constatations qu'est basée l'invention.

## EXPOSÉ DE L'INVENTION

L'invention a donc, en premier lieu, pour objet un matériau organique mésoporeux, qui est susceptible d'être obtenu par une polymérisation réticulante d'un monomère de formule (I) ci-après :

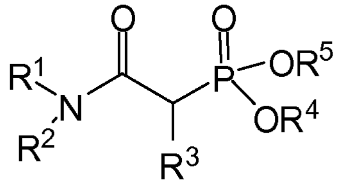

(I)

dans laquelle :

$R^1$, $R^2$ et $R^3$ représentent, indépendamment les uns des autres, un atome d'hydrogène, un groupe hydrocarboné, saturé ou insaturé, linéaire ou ramifié, comprenant de 1 à 12 atomes de carbone ou un groupe polymérisable comprenant au moins une insaturation, avec la condition que l'un au moins de $R^1$, $R^2$ et $R^3$ soit un groupe

polymérisable ;

$R^4$ et $R^5$ représentent, indépendamment l'un de l'autre, un atome d'hydrogène ou un groupe hydrocarboné, saturé ou insaturé, linéaire ou ramifié, comprenant de 1 à 8 atomes de carbone ;

la polymérisation réticulante étant réalisée en présence d'un agent réticulant et d'un ou plusieurs agents porogènes.

Dans ce qui précède et ce qui suit, on considère qu'un matériau est mésoporeux lorsque plus de 40 % en volume et, mieux encore, plus de 50 % en volume des pores de ce matériau sont des mésopores, c'est-à-dire des pores dont le diamètre est compris entre 2 nm et 50 nm (bornes incluses) conformément à la définition de l'International **U**nion of **P**ure and **A**pplied **C**hemistry.

En d'autres termes, on considère qu'un matériau est mésoporeux lorsque le volume occupé par les mésopores de ce matériau représente plus de 40%, de préférence plus de 50% du volume total des pores dudit matériau.

Le volume total des pores du matériau et le volume des mésopores de ce matériau sont déterminés par porosimétrie à l'azote (isotherme d'adsorption/ désorption d'azote à 77K, avec une pression relative $P/P_0$ allant de $10^{-9}$ à 1) au moyen d'un analyseur de porosité du type Micromeritics 3Flex™ et en appliquant la méthode de Barrett-Joyner-Halenda (ou méthode BJH) telle que décrite dans Journal of the American Chemical Society 1951, 73(1), 373-380 (référence **[4]**).

Par ailleurs, on entend par « *groupe hydrocarboné, saturé ou insaturé, linéaire ou ramifié, comprenant de 1 à 12 atomes de carbone* », tout groupe alkyle, alcényle ou alcynyle, à chaîne linéaire ou ramifiée, qui comprend au moins 1 atome de carbone (lorsqu'il est un groupe alkyle) ou au moins 2 atomes de carbone (lorsqu'il est un groupe alcényle ou alcynyle) mais qui ne comprend pas plus de 12 atomes de carbone. Un tel groupe peut donc comprendre 1 atome de carbone, 2 atomes de carbone, 3 atomes de carbone, 4 atomes de carbone, etc., jusqu'à 12 atomes de carbone compris. Parmi ces groupes, préférence est donnée aux groupes alkyles linéaires ou ramifiés.

De manière analogue, on entend par « *groupe hydrocarboné, saturé ou insaturé, linéaire ou ramifié, comprenant de 1 à 8 atomes de carbone* », tout groupe alkyle, alcényle ou alcynyle, à chaîne linéaire ou ramifiée, qui comprend au moins 1 atome de carbone (lorsqu'il est un groupe alkyle) et au moins 2 atomes de carbone (lorsqu'il est un groupe alcényle ou alcynyle) mais qui ne comprend pas plus de 8 atomes de carbone. Un tel groupe peut donc comprendre 1 atome de carbone, 2 atomes de carbone, 3 atomes de carbone, 4 atomes de carbone, etc., jusqu'à 8 atomes de carbone compris. Là également, parmi ces groupes, préférence est donnée aux groupes alkyles linéaires ou ramifiés.

Conformément à l'invention, l'insaturation du groupe polymérisable peut être une insaturation éthylénique (c'est-à-dire à double liaison C=C) ou acétylénique (c'est-à-dire à triple liaison C≡C), préférence étant donnée à une insaturation éthylénique.

Avantageusement, le groupe polymérisable répond à l'une des formules (a), (b), (c), (d), (e), (f) et (g) ci-après :

$$-(CH_2)_q-X \qquad (a)$$

$$-(CH_2)_p-C(O)-O-(CH_2)_q-X \qquad (b)$$

$$-(CH_2)_p-O-C(O)-(CH_2)_q-X \qquad (c)$$

$$-(CH_2)_p-C(O)-NH-(CH_2)_q-X \qquad (d)$$

$$-(CH_2)_p-O-(CH_2)_q-X \qquad (e)$$

$$-(CH_2)_p-O-C_2H_5-(O-C_2H_5)_q-X \qquad (f)$$

$$-(CH_2)_p-\text{triazole}-(CH_2)_q-X \qquad (g)$$

dans laquelle :

p est un nombre entier allant de 1 à 6 ;

q est un nombre entier allant de 0 à 12 ; tandis que

X représente un groupe de formule (i) ou (ii) ci-après :

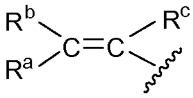 (i)

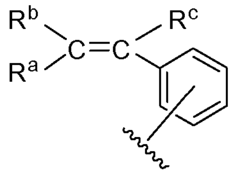 (ii)

dans laquelle :

$R^a$, $R^b$ et $R^c$ représentent, indépendamment les uns des autres, un atome d'hydrogène ou un groupe alkyle linéaire ou ramifié, comprenant de 1 à 10 atomes de carbone et, mieux encore, 1 ou 2 atomes de carbone (typiquement méthyle ou éthyle) ; et

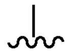

représente la liaison covalente par laquelle X est lié au reste du groupe de formule (a), (b), (c), (d), (e), (f) ou (g) ci-avant.

De préférence, X répond à la formule (ii) dans laquelle $R^a$, $R^b$ et $R^c$ représentent tous trois un atome d'hydrogène de sorte que le groupe polymérisable comprenne un groupe styrényle -Ph-CH=$CH_2$, propre à conférer au matériau une résistance particulièrement élevée aux acides et aux bases.

Plus encore, on préfère que le groupe polymérisable réponde à la formule (a) et que, dans cette formule, q aille de 1 à 4 et X réponde à la formule (ii) dans laquelle $R^a$, $R^b$ et $R^c$ représentent tous trois un atome d'hydrogène. Auquel cas, le groupe d'atomes $CR^aR^b$=$CR^c$- est préférentiellement situé en position para par rapport au groupe -$CH_2$- auquel le groupe phényle est lié.

Ainsi, le groupe polymérisable peut notamment répondre à la formule (a1) ci-après :

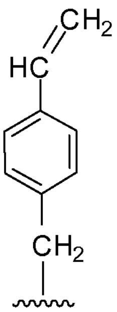

dans laquelle

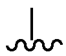

représente la liaison covalente par laquelle ce groupe polymérisable est lié au reste du monomère de formule (I).

Conformément à l'invention, le monomère répond, de préférence, à la formule (I) dans laquelle :

$R^1$ et $R^2$ représentent, indépendamment l'un de l'autre, un atome d'hydrogène, un groupe hydrocarboné, saturé ou insaturé, linéaire ou ramifié, comprenant de 1 à 12 atomes de carbone ;
$R^3$ représente un groupe polymérisable ; et
$R^4$ et $R^5$ sont tels que précédemment définis.

Plus encore, on préfère que le monomère réponde à la formule (I) dans laquelle :

$R^1$ et $R^2$ sont identiques entre eux et représentent un groupe alkyle linéaire ou ramifié, comprenant de 1 à 12 atomes de carbone et, mieux encore, de 1 à 6 atomes de carbone, les groupes éthyle et n-butyle étant tout particulièrement préférés ;
$R^3$ représente un groupe polymérisable ; et
$R^4$ et $R^5$ représentent, indépendamment l'un de l'autre, un atome d'hydrogène ou un groupe alkyle linéaire ou

ramifié, comprenant de 1 à 8 atomes de carbone et, mieux encore, de 1 à 4 atomes de carbone, les groupes éthyle et n-butyle étant, là également, tout particulièrement préférés.

Un tel monomère répond, par exemple, à la formule (I) dans laquelle $R^1$ et $R^2$ représentent un groupe éthyle, $R^3$ représente un groupe polymérisable de formule (a1), $R^4$ représente un groupe éthyle tandis que $R^5$ représente un atome d'hydrogène.
L'agent réticulant, ou agent de réticulation, peut être tout composé comprenant au moins deux groupes insaturés aptes à réagir chacun avec un groupe polymérisable de deux molécules différentes du monomère pour permettre la formation de ponts entre les chaînes issues de la polymérisation du monomère.
Avantageusement, cet agent réticulant est choisi parmi les dérivés polyvinyliques du benzène ou du naphtalène tels qu'un divinylbenzène (par exemple, le 2,4-divinylbenzène), un trivinylbenzène (par exemple, le 1,2,4-trivinylbenzène), un divinylnaphtalène (par exemple, le 1,8-divinylnaphtalène), un divinylalkylbenzène (par exemple, le 1,2-divinyl-3,4-diméthylbenzène), préférence étant donnée au 1,4-divinylbenzène.
Typiquement, le monomère et l'agent réticulant sont utilisés dans des proportions massiques qui vont de 99:1 à 40:60.
Conformément à l'invention, la polymérisation réticulante du monomère est, de préférence, réalisée en présence d'un premier agent porogène (1) qui est un solvant organique dans lequel sont solubles le monomère et l'agent réticulant, tel que le cyclohexane ou le toluène, et d'un deuxième agent porogène (2) qui est un polymère tel qu'un polyéthylène glycol, un polypropylène glycol, un éther mono- ou dialkylique de polyéthylène glycol, une polyvinylpyrrolidone, l'alcool *tert*-amylique ou un mélange de ceux-ci. Les agents porogènes (1) et (2) sont utilisés dans des proportions qui permettent de conduire à une mésoporosité.
Ainsi, par exemple, l'utilisation de toluène en association avec du polypropylène glycol, notamment dans des proportions massiques de 96:4, s'est révélée particulièrement bien convenir à l'obtention d'une mésoporosité.
De préférence encore, la polymérisation réticulante est une polymérisation en suspension, c'est-à-dire qui met en jeu deux phases non miscibles entre elles, à savoir :

- une phase dispersée - ou phase organique - qui comprend le monomère, l'agent réticulant, un amorceur de polymérisation (tel que l'azobisiso-butyronitrile, le chlorhydrate de 2,2-azobis(2-amidinopropane), le peroxyde de benzoyle ou analogues) et le ou les agents porogènes en solution dans un solvant organique, étant entendu que, comme précisé précédemment, le solvant organique peut être l'un des agents porogènes ; et
- une phase dispersante - ou phase aqueuse - qui comprend un agent dispersant (tel que le chlorure de sodium) et un agent émulsionnant (tel qu'un alcool polyvinylique) en solution dans de l'eau.

Ainsi, par exemple, la phase dispersée comprend le monomère, du 1,4-divinylbenzène, de l'azobisisobutyronitrile et du polypropylène glycol en solution dans du toluène, tandis que la phase dispersante comprend du chlorure de sodium et un alcool polyvinylique en solution dans de l'eau.
Après mélange des deux phases et émulsification du mélange, par exemple pendant une heure sous atmosphère inerte (telle qu'un balayage d'argon), la polymérisation est réalisée en maintenant l'émulsion, par exemple à une température de 80°C, pendant plusieurs heures, par exemple 5 heures, également sous atmosphère inerte.
Le polymère ainsi obtenu, qui se présente typiquement sous forme de billes, est récupéré, lavé, avantageusement soumis à une extraction de type Soxhlet, puis séché, par exemple dans une étuve.
Le matériau selon l'invention a montré une capacité d'extraction de l'uranium(VI) présent dans un milieu aqueux particulièrement élevée ainsi qu'une haute sélectivité pour l'uranium(VI) vis-à-vis du fer qui représente l'impureté métallique majoritairement présente dans les solutions aqueuses résultant de l'attaque des phosphates naturels par de l'acide sulfurique.
Aussi, l'invention a-t-elle également pour objet l'utilisation d'un matériau organique mésoporeux tel que précédemment défini pour extraire l'uranium(VI) d'un milieu aqueux comprenant de l'acide phosphorique et de l'uranium(VI) et, plus spécifiquement, d'une solution aqueuse résultant de l'attaque d'un phosphate naturel par de l'acide sulfurique.
Conformément à l'invention, ce milieu aqueux peut comprendre de l'acide phosphorique dans une très grande gamme de concentrations et, en particulier, à des concentrations allant de 0,01 mol/L à 9 mol/L d'acide phosphorique.
Il peut de plus comprendre du fer.
L'extraction de l'uranium(VI) d'un milieu aqueux comprenant de l'acide phosphorique au moyen d'un matériau selon l'invention est extrêmement simple à mettre en œuvre puisqu'il suffit de mettre ce matériau en contact avec le milieu aqueux, par exemple dans un réacteur sous agitation ou dans une colonne, pendant un temps suffisant pour permettre à l'uranium(VI) d'être complexé par le matériau, puis de séparer ce dernier du milieu aqueux.
Typiquement, on utilise de 0,5 à 1,5 kg de matériau pour 500 L à 1500 L de milieu aqueux.
Selon l'objectif dans lequel on extrait l'uranium(VI) du milieu aqueux (récupération de l'uranium(VI) en vue de sa valorisation ou épuration du milieu aqueux en uranium(VI)), il est ensuite possible soit de désextraire l'uranium(VI)

du matériau selon l'invention, par exemple au moyen d'une solution aqueuse acide du type solution aqueuse d'acide sulfurique concentrée, par exemple à 5 mol/L d'acide sulfurique, ou au moyen d'une solution aqueuse basique du type solution aqueuse de carbonate de sodium ou de carbonate d'ammonium.

Aussi, l'invention a-t-elle encore pour objet un procédé de récupération de l'uranium(VI) présent dans un milieu aqueux comprenant de l'acide phosphorique, lequel procédé comprend :

a) une extraction de l'uranium(VI) du milieu aqueux par un matériau organique mésoporeux tel que précédemment défini, l'extraction comprenant une mise en contact du milieu aqueux avec le matériau, puis une séparation du milieu aqueux et du matériau ;
b) une désextraction de l'uranium(VI) du matériau obtenu à l'issue de l'étape a), la désextraction comprenant la mise en contact du matériau avec une solution aqueuse acide ou basique, puis une séparation du matériau et de la solution aqueuse basique.

Comme précédemment, ce milieu aqueux peut comprendre de 0,01 mol/L à 9 mol/L d'acide phosphorique, et peut comprendre de plus du fer.

Dans ce procédé, le milieu aqueux comprenant de l'acide phosphorique est avantageusement une solution aqueuse résultant de l'attaque d'un phosphate par de l'acide sulfurique.

D'autres avantages et caractéristiques de l'invention apparaîtront à la lecture du complément de description qui suit, qui se rapporte à des exemples de préparation de matériaux selon l'invention ainsi qu'à des exemples de démonstration des propriétés de ce matériau.

Il va de soi que ces exemples ne sont donnés qu'à titre d'illustrations des objets de l'invention et ne constituent en aucun cas une limitation de ces objets.

## BRÈVE DESCRIPTION DES FIGURES

La figure 1 illustre la courbe de distribution volumique du diamètre des pores (fonction semi-logarithmique dV/dlog(D), exprimée en cm$^3$/g.Å, en fonction du diamètre des pores, noté D et exprimé en Å), telle que déterminée par adsorption-désorption d'azote en appliquant la méthode Barrett-Joyner-Halenda (ou méthode BJH), d'un premier matériau selon l'invention.

La figure 2 illustre la courbe de distribution volumique du diamètre des pores (fonction semi-logarithmique dV/dlog(D), exprimée en cm$^3$/g.Å, en fonction du diamètre des pores, noté D et exprimé en Å), telle que déterminée par adsorption-désorption d'azote en appliquant la méthode BJH, d'un deuxième matériau selon l'invention.

La figure 3 illustre la courbe de distribution volumique du diamètre des pores (fonction semi-logarithmique dV/dlog(D), exprimée en cm$^3$/g.Å, en fonction du diamètre des pores, noté D et exprimé en Å), telle que déterminée par adsorption-désorption d'azote en appliquant la méthode BJH, d'un matériau ayant la même composition chimique que les matériaux auxquels se rapportent les figures 1 et 2 mais se différenciant de ceux-ci en ce qu'il est microporeux.

## EXPOSÉ DÉTAILLÉ DE MODES DE RÉALISATION PARTICULIERS

### EXEMPLE 1: PRÉPARATION DE MATÉRIAUX SELON L'INVENTION

* *Matériau M1 :*

On prépare un premier matériau selon l'invention, ci-après matériau M1, par polymérisation réticulante de l'amidophosphonate de formule ci-après :

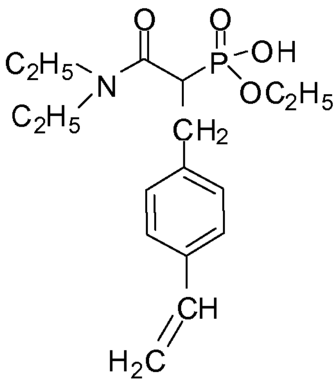

et du divinylbenzène (ou DVB).

Cette polymérisation est réalisée en suspension, c'est-à-dire par un procédé mettant en jeu deux phases non miscibles entre elles, à savoir :

* une phase dispersée - ou phase organique - comprenant les monomères (i.e. amidophosphonate et DVB), de l'azobisisobutyronitrile (ou AIBN) en tant qu'amorceur, et un polypropylène glycol (ou PPG) en tant qu'agent porogène polymère, en solution dans du toluène, ce dernier servant à la fois de solvant et d'agent porogène ; et

* une phase dispersante - ou phase aqueuse - comprenant un alcool polyvinylique (ou PVA) en tant qu'agent émulsionnant, et du chlorure de sodium en tant qu'agent dispersant, en solution dans de l'eau.

Pour ce faire, on prépare, d'une part, la phase dispersante dont la composition est présentée dans le tableau I ci-après.

Tableau I

| **Composants** | **Quantités massiques** (g) |
|---|---|
| Eau | 154,5 |
| NaCl | 5,1 (soit un rapport massique NaCl/eau de 3,30%) |
| PVA (Sigma-Aldrich, réf. : 363073) | 1,16 (soit un rapport massique PVA/eau de 0,75%) |

Puis, on place cette phase dispersante dans un ballon bicol que l'on maintient sous agitation (au moyen d'un mobile d'agitation demi-lune de 5 cm) tout en balayant le ballon par de l'argon pour éliminer toute trace d'oxygène de ladite phase dispersante.

On prépare, d'autre part, la phase dispersée dont la composition est présentée dans le tableau II ci-après.

Tableau II

| **Composants** | **Quantités massiques** (g) |
|---|---|
| Toluène | 3,113 |
| Amidophosphonate | 2,32 (soit un rapport massique amidophosphonate/monomères de 89,4%) |
| DVB (degré de pureté : 80%) (Sigma-Aldrich, réf. : 414565) | 0,343 (soit un rapport massique DVB/monomères de 10,6%) |
| AIBN (Molekula) | 0,028 (soit un rapport molaire AIBN/monomères de 2%) |
| PPG (BASF, Pluriol™ P900) | 0,130 (soit un rapport massique PPG/toluène de 4%) |

On ajoute la phase dispersée à la phase dispersante et on maintient l'ensemble sous agitation et balayage d'argon pendant 1 heure pour obtenir une émulsion homogène.

On arrête le balayage d'argon. On porte la température de l'émulsion à 80°C et on maintient l'émulsion à cette

température pendant 5 heures pour réaliser la polymérisation réticulante qui se traduit par la formation de billes dans le milieu réactionnel.

Les billes ainsi formées sont récupérées par filtration, lavées successivement à l'eau, à l'éthanol et à l'acétone, puis soumises à une extraction Soxhlet pendant 24 heures à l'acétone pour éliminer toute trace d'agent porogène polymère et de solvant. Après quoi, elles sont séchées dans une étuve portée à 90°C pendant 24 heures.

Ces billes sont constituées d'un matériau dont les caractéristiques physico-chimiques sont les suivantes :

- diamètre moyen des pores (tel que déterminé par adsorption-désorption d'azote en appliquant la méthode BJH) : 20 - 40 nm (cf. figure 1) ;
- surface spécifique (telle que déterminée par adsorption-désorption d'azote en appliquant la méthode Brunauer-Emmett-Teller ou méthode BET) : 49 $m^2/g$ ;
- quantité molaire de molécules amidophosphonates dans le matériau (telle que déterminée par une analyse RMN du phosphore) : 1,6 mmol/g de matériau.

* *Matériau M2* :

On prépare un deuxième matériau selon l'invention, ci-après matériau M2, en suivant le même protocole opératoire que celui décrit ci-avant pour la préparation du matériau M1 à cette exception près que l'on utilise la phase dispersante dont la composition est présentée dans le tableau III ci-après.

Tableau III

| **Composants** | **Quantités massiques** (g) |
|---|---|
| Eau | 148,30 |
| NaCl | 4,89 (soit un rapport massique NaCl/eau de 3,30%) |
| PVA (Sigma-Aldrich, réf. : 363073) | 1,11 (soit un rapport massique PVA/eau de 0,75%) |

Le matériau M2 a les caractéristiques physico-chimiques suivantes :

- diamètre moyen des pores (tel que déterminé par adsorption-désorption d'azote en appliquant la méthode BJH) : 25 - 30 nm (cf. figure 2) ;
- surface spécifique (telle que déterminée par adsorption-désorption d'azote en appliquant la méthode BET) : 29 $m^2/g$ ;
- quantité molaire de molécules amidophosphonates dans le matériau (telle que déterminée par une analyse RMN du phosphore) : 1,9 mmol/g de matériau.

**EXEMPLE 2: PROPRIÉTÉS DES MATÉRIAUX SELON L'INVENTION**

**2.1 - Extraction de l'uranium(VI) de solutions aqueuses d'acide phosphorique à teneur variable en uranium(VI)** :

Les propriétés d'extraction du matériau M1 sont tout d'abord appréciées par un isotherme d'extraction à 25°C dont l'objectif est de déterminer la quantité d'uranium(VI) qui est extrait, à l'équilibre, d'une solution aqueuse d'acide phosphorique par ce matériau en fonction de la concentration d'uranium(VI) que présente initialement cette solution.

Pour ce faire, des échantillons de 50 mg du matériau M1 sont mis en contact (par immersion) avec 50 mL d'une série de solutions aqueuses comprenant chacune 5 mol/L d'acide phosphorique et de 0,01 g/L à 10 g/L d'uranium(VI). Les dispersions ainsi obtenues sont vigoureusement agitées pendant 24 heures dans un agitateur-incubateur permettant de les maintenir à une température constante de 25°C. Puis, les échantillons du matériau M1 sont récupérés par filtration des dispersions.

Les quantités d'uranium(VI) présent dans les filtrats sont mesurées. Lorsque ces mesures ne peuvent pas être réalisées parce que les quantités d'uranium(VI) présent dans les filtrats sont trop faibles, alors les mesures sont réalisées sur des solutions aqueuses résultant de la minéralisation par voie humide des échantillons du matériau M1, c'est-à-dire de la dissolution de ces échantillons dans de l'acide nitrique à 8-10 mol/L sous micro-ondes.

Dans tous les cas, les mesures sont réalisées par spectrométrie d'émission atomique par torche à plasma (ou ICP-AES).

Pour chaque solution aqueuse d'acide phosphorique utilisée dans les tests, la capacité d'extraction de l'uranium(VI) du matériau M1, notée $Q_U$ et exprimée en mg d'U(VI)/g de matériau, est déterminée :

- soit par la formule suivante :

$$Q_U = ([U]_i - [U]_f) \times \frac{V}{m}$$

avec :

$[U]_i$ : concentration initiale de l'uranium(VI) dans la solution aqueuse d'acide phosphorique (en mg/L) ;
$[U]_f$ : concentration finale de l'uranium(VI) dans le filtrat (en mg/L) ;
V: volume de l'aliquote de la solution aqueuse d'acide phosphorique dans lequel a été immergé le matériau (en L); et
m: masse de l'échantillon du matériau M1 ayant été immergé dans la solution aqueuse d'acide phosphorique (en mg) ;

- soit par le rapport de la quantité d'uranium(VI), telle que mesurée par ICP-AES dans la solution aqueuse d'acide nitrique issue de la minéralisation de l'échantillon du matériau M1, à la masse de l'échantillon du matériau M1 ayant été immergé dans la solution aqueuse d'acide phosphorique.

Le tableau IV ci-après présente les résultats obtenus.

Tableau IV

| $[U]_i$ (g/L) | $Q_U$ (mg/g) |
|---|---|
| 0,01 | 6 |
| 0,03 | 14 |
| 0,05 | 20 |
| 0,10 | 37 |
| 0,15 | 41 |
| 0,20 | 45 |
| 0,30 | 55 |
| 0,50 | 62 |
| 1 | 67 |
| 5 | 92 |
| 9 | 103 |
| 47 | 118 |
| 64 | 112 |

Ce tableau montre que la capacité d'extraction du matériau M1 à saturation est égale à 112 mg U(VI)/g de matériau, ce qui démontre un pouvoir extractant du matériau M1 très largement supérieur au pouvoir extractant des matériaux proposés dans l'état de la technique pour extraire l'uranium(VI) d'un milieu comprenant 5 mol/L d'acide phosphorique.

**2.2** - **Extraction de l'uranium(VI) de solutions aqueuses d'acide phosphorique comprenant de l'uranium(VI) et du fer :**

Les propriétés d'extraction du matériau M1 sont également appréciées par une série de tests d'extraction que l'on réalise en utilisant trois solutions aqueuses synthétiques différentes, dénommées ci-après S1, S2 et S3, qui présentent des teneurs en uranium(VI) et en fer représentatives de solutions aqueuses d'acide phosphorique réellement utilisées dans la fabrication d'engrais phosphatés, mais dont on fait varier la concentration en acide phosphorique de 1 mol/L à 9 mol/L.

La composition des solutions S1, S2 et S3 est précisée dans le tableau V ci-après.

Tableau V

| Solution aqueuse | $[H_3PO_4]$ (mol/L) | [U(VI)] (mg/L) | [Fe] (mg/L) |
|---|---|---|---|
| S1 | 1 | 192 | 1831 |
| S2 | 5 | 189 | 1795 |
| S3 | 9 | 186 | 1796 |

Pour chacune des solutions S1, S2 et S3, les extractions sont réalisées jusqu'à saturation du matériau M1 en uranium(VI).

Pour ce faire, des échantillons de 50 mg du matériau M1 sont mis en contact (par immersion) avec une première aliquote de 50 mL de chacune des solutions S1, S2 et S3, puis les dispersions obtenues sont vigoureusement agitées pendant 24 heures dans un agitateur-incubateur permettant de les maintenir à une température constante de 25°C.

Après quoi, les échantillons du matériau M1 sont récupérés par filtration des dispersions et sont remis en contact (par immersion) pendant 24 heures, dans les mêmes conditions d'agitation et de température que précédemment, avec une nouvelle aliquote de 50 mL de la même solution que précédemment et ce protocole est répété autant de fois que nécessaire jusqu'à ce que les échantillons du matériau M1 soient saturés en uranium(VI).

La mise en évidence de la saturation des échantillons du matériau M1 en uranium(VI) est réalisée par un dosage systématique par ICP-AES de l'uranium(VI) présent dans les filtrats. Un échantillon du matériau M1 est considéré comme saturé en uranium(VI) lorsque le filtrat obtenu à l'issue d'une mise en contact de cet échantillon avec une aliquote de solution aqueuse a la même teneur en uranium(VI) que cette aliquote.

La capacité d'extraction de l'uranium(VI) du matériau M1, notée $Q_U$ et exprimée en mg d'U(VI)/g de matériau, est déterminée par la même formule que celle indiquée au point 2.1 ci-avant.

Le facteur d'enrichissement du matériau M1 en uranium(VI) et en fer, noté $F.E_{Fe}^{U}$, est, lui, déterminé à partir des quantités d'uranium(VI) et de fer mesurées par ICP-AES dans des solutions aqueuses résultant de la minéralisation par voie humide des échantillons de ce matériau, en utilisant la formule suivante :

$$F.E_{Fe}^{U} = \frac{Q_U / Q_{Fe}}{[U]_i / [Fe]_i}$$

avec :

- $Q_U$ : concentration de l'uranium(VI) dans le matériau à saturation (en mmol/g) ;
- $Q_{Fe}$ : concentration du fer dans le matériau à saturation (en mmol/g) ;
- $[U]_i$ : concentration initiale de l'uranium(VI) dans la solution aqueuse d'acide phosphorique (en mmol/L) ;
- $[Fe]_i$ : concentration initiale du fer dans la solution aqueuse d'acide phosphorique (en mmol/L).

Ce facteur d'enrichissement permet de rendre compte de la sélectivité du matériau M1 pour l'uranium(VI) vis-à-vis du fer: ainsi, un facteur d'enrichissement supérieur à 1 indique une sélectivité pour l'uranium(VI) vis-à-vis du fer, sélectivité qui est d'autant plus élevée que le facteur d'enrichissement est élevé.

Le tableau VI ci-après présente les résultats obtenus.

Tableau VI

| Solution aqueuse | $Q_U$ (mg/g) | $F.E_{Fe}^{U}$ |
|---|---|---|
| S1 | 51 | 44 |
| S2 | 42 | 37 |
| S3 | 24 | 31 |

Ce tableau montre que la capacité d'extraction de l'uranium(VI) et le facteur d'enrichissement du matériau M1 diminuent lorsque la concentration de l'acide phosphorique de la solution aqueuse dont est extrait l'uranium(VI) augmente mais qu'ils restent néanmoins très élevés pour une concentration d'acide phosphorique égale ou supérieure à 5 mol/L.

**2.3** - **Désextraction de l'uranium(VI) des matériaux selon l'invention** :

La réversibilité du matériau M1, c'est-à-dire la possibilité de récupérer en solution aqueuse l'uranium(VI) ayant été extrait par ce matériau, est appréciée par un test de désextraction (ou test d'élution) que l'on réalise sur un échantillon du matériau M1 ayant été préalablement chargé en uranium(VI) et en fer par trois mises en contact successives (sous agitation vigoureuse, pendant 24 heures et à 25°C) avec des aliquotes (50 mL) de la solution S2 telle que définie au point 2.2 ci-avant.

La charge de cet échantillon en uranium(VI) est de 26,4 mg/g, tandis que sa charge en fer est de 7,20 mg/g.

Le test de désextraction consiste, lui, à mettre en contact (par immersion) l'échantillon du matériau M1 chargé en uranium(VI) et en fer dans 5 mL d'une solution comprenant 1 mol/L de carbonate d'ammonium ($(NH_4)_2CO_3$), à agiter vigoureusement la dispersion ainsi obtenue pendant 24 heures dans un agitateur-incubateur permettant de la maintenir à une température constante de 25°C, puis à récupérer l'échantillon du matériau M1 par filtration.

Les quantités d'uranium(VI) et de fer présents dans le filtrat sont mesurées par ICP-AES.

Le tableau VII présente les résultats obtenus.

Tableau VII

| | **U** | **Fe** |
|---|---|---|
| Quantité présente sur l'échantillon du matériau M1 avant désextraction (en mg) | 1,32 | 0,36 |
| Quantité récupérée dans le filtrat après désextraction (en mg) | 1,30 | 0,31 |
| Taux de récupération (en %) | > 95 | > 86 |

Ce tableau montre qu'il est possible de désextraire de façon quantitative l'uranium(VI) et le fer du matériau selon l'invention par une seule mise en contact de ce matériau avec une solution de carbonate d'ammonium à 1 mol/L. Le fer ne constitue donc pas pour le matériau selon l'invention un « poison » qui serait susceptible d'en limiter les performances au cours de cycles d'extraction/désextraction.

**2.4** - **Aptitude des matériaux selon l'invention à réaliser plusieurs cycles d'extraction/désextraction** :

Afin de vérifier si le matériau M1 est capable de conserver ses propriétés extractantes à l'issue d'un cycle d'extraction/désextraction, on soumet un échantillon de 50 mg de ce matériau à :

- deux cycles successifs d'extraction comprenant chacun trois mises en contact (sous agitation vigoureuse, pendant 24 heures et à 25°C) de l'échantillon du matériau M1 avec des aliquotes (50 mL) d'une solution aqueuse d'acide phosphorique, dénommée ci-après S4, qui comprend 5 mol/L d'acide phosphorique, 192 mg/L d'uranium(VI) et 1797 mg/L de fer, avec
- entre les deux cycles d'extraction, une désextraction (ou élution) de l'uranium(VI) et du fer ayant été extraits par l'échantillon du matériau M1 au cours du premier cycle d'extraction, cette désextraction étant réalisée par une mise en contact (sous agitation vigoureuse, pendant 24 heures et à 25°C) de l'échantillon du matériau M1 avec 5 mL d'une solution aqueuse comprenant 1 mol/L de carbonate d'ammonium.

Les quantités d'uranium(VI) présent dans les filtrats obtenus à l'issue des différentes mises en contact sont mesurées par ICP-AES et les quantités d'uranium(VI) extrait au cours de ces mises en contact sont calculées par différence entre la quantité d'uranium(VI) initialement présent dans les aliquotes de la solution S4 et les quantités d'uranium(VI) ainsi mesurées.

Pour chaque mise en contact, la capacité d'extraction de l'uranium(VI) du matériau M1, notée $Q_U$ et exprimée en mg d'U(VI)/g de matériau, est déterminée par la même formule que celle indiquée au point 2.1 ci-avant.

Le tableau VIII présente les résultats obtenus.

Tableau VIII

| | | **1^er contact** | **2ème contact** | **3ème contact** |
|---|---|---|---|---|
| $\mathbf{Q}_U$ (mg/g) | 1er cycle d'extraction | 3,9 | 11,5 | 16,7 |
| | 2ème cycle d'extraction | 10,3 | 15,4 | 18,4 |

Ce tableau montre qu'au cours du deuxième cycle d'extraction, le matériau selon l'invention présente une aptitude à extraire l'uranium(VI) tout à fait comparable à celle qu'il présente au cours du premier cycle d'extraction.

Le matériau selon l'invention est donc, de par sa structure physique et chimique, parfaitement résistant à des solutions acides et basiques telles que celles respectivement utilisées dans le premier cycle d'extraction et pour la désextraction.

**2.5** - **Implication de la structure physique des matériaux selon l'invention dans leurs propriétés extractantes**

Des tests d'extraction sont réalisés pour comparer les propriétés extractantes des matériaux M1 et M2 avec celles d'un matériau, ci-après matériau M3, qui a la même composition chimique que les matériaux M1 et M2 mais qui est microporeux (conformément à la définition de l'IUPAC - cf. figure 3) au lieu d'être mésoporeux.

Le matériau M3 est obtenu par le même protocole opératoire que celui décrit dans l'exemple 1 ci-avant mais en utilisant une phase dispersée dans laquelle le co-agent porogène, c'est-à-dire le PPG, est remplacé par du toluène. Cette phase dispersée a donc la composition suivante: toluène: 3,243 g; amidophosphonate : 2,32 g; DVB : 0,343 g; AIBN : 0,028 g.

Les tests d'extraction sont réalisés en utilisant deux solutions aqueuses d'acide phosphorique différentes, à savoir la solution S4 utilisée dans l'exemple 2.4 ci-avant ($H_2PO_4$ : 5 mol/L; U(VI) : 192 mg/L; Fe : 1797 mg/L) et une solution, dénommée ci-après S5, qui comprend 5 mol/L d'acide phosphorique, 171 mg d'uranium(VI) et 1875 mg/L de fer, jusqu'à saturation des matériaux M1, M2 et M3.

Pour ce faire, des échantillons de 50,3 mg du matériau M1 et de 51,6 mg du matériau M2 sont mis en contact chacun (par immersion) avec une aliquote de 50 mL de la solution S4 tandis qu'un échantillon de 250 mg du matériau M3 est mis en contact (par immersion) avec une aliquote de 10 mL de la solution S5, puis les dispersions obtenues sont vigoureusement agitées pendant 24 heures dans un agitateur-incubateur permettant de les maintenir à une température constante de 25°C.

Après quoi, les échantillons des matériaux M1, M2 et M3 sont récupérés par filtration et remis en contact (par immersion) pendant 24 heures, dans les mêmes conditions d'agitation et de température que précédemment, avec une nouvelle aliquote de la même solution que précédemment et ce protocole est répété autant de fois que nécessaire jusqu'à ce que les échantillons des matériaux M1, M2 et M3 soient saturés en uranium(VI).

La mise en évidence de la saturation des échantillons des matériaux M1, M2 et M3 en uranium(VI) est réalisée par un dosage systématique par ICP-AES de l'uranium(VI) présent dans les filtrats. Comme précédemment, un échantillon d'un matériau est considéré comme saturé en uranium(VI) lorsque le filtrat obtenu à l'issue d'une mise en contact de ce matériau avec une aliquote de solution aqueuse a la même teneur en uranium(VI) que cette aliquote.

La capacité d'extraction de l'uranium(VI) des matériaux, notée Qu et exprimée en mg d'U(VI)/g de matériau, est déterminée par la même formule que celle indiquée au point 2.1 ci-avant.

Le facteur d'enrichissement des matériaux M1, M2 et M3 en uranium(VI) et en fer, noté $F.E_{Fe}^{U}$, est, lui, déterminé à partir des quantités d'uranium(VI) et de fer mesurées par ICP-AES dans des solutions aqueuses résultant de la minéralisation par voie humide des échantillons de ces matériaux, par la même formule que celle indiquée au point 2.2 ci-avant.

Le tableau IX ci-après présente, pour chacun des matériaux M1, M2 et M3, la solution aqueuse utilisée, le volume de l'aliquote de cette solution aqueuse ($V_{solution}$), la masse de l'échantillon du matériau testé ($M_{échantillon}$) ainsi que les valeurs de $Q_U$ et de $F.E_{Fe}^{U}$ obtenues.

Tableau IX

| Matériau | Solution aqueuse | $V_{solution}$ (mL) | $M_{échantillon}$ (mg) | $\mathbf{Q}_U$ (mg/g) |
|---|---|---|---|---|
| M1 | S4 | 50 | 50,3 | 58 |
| M2 | S4 | 50 | 51,6 | 56 |

(suite)

| Matériau | Solution aqueuse | $V_{solution}$ (mL) | $M_{échantillon}$ (mg) | **Q**$_U$ (mg/g) |
|---|---|---|---|---|
| M3 | S5 | 10 | 250 | 5 |

Ce tableau met en évidence tout le bénéfice apporté par la mésoporosité des matériaux selon l'invention puisque leur pouvoir extractant est plus de 10 fois supérieur à celui d'un matériau de même composition chimique mais à microporosité.

**2.6** - **Comparaison des propriétés extractantes des matériaux selon l'invention avec celles de matériaux de l'état de la technique** :

* *Comparaison avec des résines échangeuses d'ions commerciales :*

Des tests d'extraction sont réalisés pour comparer les propriétés extractantes du matériau M1 avec celles des résines échangeuses d'ions chélatantes qui sont commercialisées sous les dénominations Amberlite™ IRC 747 (Dow), Lewatit™ TP 260 (Lanxess), Diphonix™ (Triskem International) et Monophos™ (DSM).

Ces tests d'extraction sont réalisés jusqu'à saturation du matériau M1 et des résines commerciales en procédant comme décrit précédemment.

Le tableau X ci-après présente, pour chacun des cinq matériaux testés, la composition de la solution aqueuse utilisée, le volume de l'aliquote de cette solution aqueuse ($V_{solution}$), la masse de l'échantillon du matériau testé ($M_{échantillon}$) ainsi que les valeurs de $Q_U$ et de $F.E^{U}_{Fe}$ obtenues.

Tableau X

| Matériau | Solution aqueuse | | | $V_{solution}$ (mL) | $M_{échantillon}$ (mg) | **Q**$_U$ (mg/g) | $\mathbf{F.E^{U}_{Fe}}$ |
|---|---|---|---|---|---|---|---|
| | $[H_3PO_4]$ (mol/L) | [U] (mg/L) | [Fe] (mg/L) | | | | |
| M1 | 5 | 192 | 1797 | 50 | 50,3 | 58 | 37 |
| Amberlite™ IRC 747 | 5 | 178 | 1833 | 5 | 52,7 | 4 | 1,3 |
| Lewatit™ TP 260 | 5 | 192 | 1797 | 5 | 50,7 | 9 | 2 |
| Diphonix™ | 5 | 191 | 1993 | 5 | 50,9 | 2 | 1,5 |
| Monophos™ | 5 | 191 | 1993 | 5 | 51,4 | 1 | 1,5 |

Ce tableau montre que le matériau M1 présente des performances en termes de capacité d'extraction de l'uranium(VI) et de sélectivité pour l'uranium(VI) vis-à-vis du fer qui sont considérablement plus élevées que celles des résines échangeuses d'ions disponibles commercialement.

* *Comparaison avec un matériau selon la référence **[1]** :*

Des tests d'extraction sont également réalisés pour comparer les propriétés extractantes du matériau M1 avec celles d'un matériau qui comprend une silice mésoporeuse de type SBA-15, fonctionnalisée par post-greffage d'une pluralité de molécules répondant à la formule (I) dans laquelle $R^1$ et $R^2$ représentent chacun un groupe 2-éthylhexyle, $R^3$ représente un groupe $-CH_2-COOH$, $R^4$ représente un groupe éthyle tandis que $R^5$ représente un atome d'hydrogène.

La préparation de ce matériau est décrite dans la référence **[1].**

Les tests d'extraction sont réalisés jusqu'à saturation des deux matériaux en procédant comme décrit précédemment.

Le tableau XI ci-après présente, pour chacun des deux matériaux testés, la composition de la solution aqueuse utilisée, le volume de l'aliquote de cette solution aqueuse ($V_{solution}$), la masse de l'échantillon du matériau testé ($M_{échantillon}$) ainsi que les valeurs de Qu obtenues.

Tableau XI

| Matériau | Solution aqueuse testée | | | $V_{solution}$ (mL) | $M_{échantillon}$ (mg) | **$Q_U$** (mg/g) |
|---|---|---|---|---|---|---|
| | $[H_3PO_4]$ (mol/L) | [U] (mg/L) | [Fe] (mg/L) | | | |
| M1 | 5 | 200 | 2000 | 50 | 49,9 | 51,6 |
| Matériau de la référence **[1]** | 5 | 200 | 2000 | 50 | 50,1 | 0,5 |

Ce tableau montre que le matériau selon l'invention présente une capacité d'extraction de l'uranium(VI) qui est cent fois plus élevée que celle d'un matériau obtenu par post-greffage d'un composé amidophosphonate sur un support inorganique.

**RÉFÉRENCES CITÉES**

[1] Demande internationale PCT WO 2014/127860

[1'] Siva Kesava Raju et al., Journal of Hazarodus Materials 2007, vol.145, no.1-2, 315-322

**[2]** Yamabe et al., Separation Science and Technology 2001, 36(15), 3511-3528

[3] Jyo et al, Journal of Applied Polymer Science 1997, 63, 1327-1334

**[4]** Barrett, Joyner et Halenda, Journal of the American Chemical Society 1951, 73(1), 373-380

**Revendications**

1. Matériau organique mésoporeux, qui est susceptible d'être obtenu par une polymérisation réticulante d'un monomère de formule (I) ci-après :

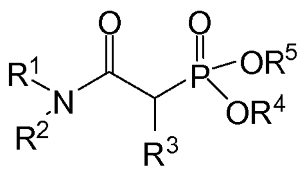

(I)

dans laquelle :

$R^1$, $R^2$ et $R^3$ représentent, indépendamment les uns des autres, un atome d'hydrogène, un groupe hydrocarboné, saturé ou insaturé, linéaire ou ramifié, comprenant de 1 à 12 atomes de carbone ou un groupe polymérisable comprenant au moins une insaturation, avec la condition que l'un au moins de $R^1$, $R^2$ et $R^3$ soit un groupe polymérisable comprenant au moins une insaturation ;
$R^4$ et $R^5$ représentent, indépendamment l'un de l'autre, un atome d'hydrogène ou un groupe hydrocarboné, saturé ou insaturé, linéaire ou ramifié, comprenant de 1 à 8 atomes de carbone ;

la polymérisation réticulante étant réalisée en présence d'un agent réticulant et d'un ou plusieurs agents porogènes.

2. Matériau selon la revendication 1, dans lequel l'insaturation du groupe polymérisable est une insaturation éthylénique.

3. Matériau selon la revendication 2, dans lequel le groupe polymérisable répond à l'une des formules (a), (b), (c), (d), (e), (f) et (g) ci-après :

$-(CH_2)_q-X$ (a)

$-(CH_2)_p-C(O)-O-(CH_2)_q-X$ (b)

$-(CH_2)_p-O-C(O)-(CH_2)_q-X$ (c)

$-(CH_2)_p-O-C(O)-NH-(CH_2)_q-X$ (d)

$-(CH_2)_p-O-(CH_2)_q-X$ (e)

$-(CH_2)_p-O-C_2H_5-(O-C_2H_5)_q-X$ (f)

$-(CH_2)_p$-triazole-$(CH_2)_q-X$ (g)

dans laquelle :

p est un nombre entier allant de 1 à 6 ;
q est un nombre entier allant de 0 à 12; et
X représente un groupe de formule (i) ou (ii) ci-après :

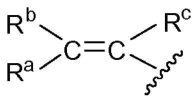
(i)

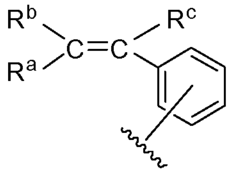
(ii)

dans laquelle :

$R^a$, $R^b$ et $R^c$ représentent, indépendamment les uns des autres, un atome d'hydrogène ou un groupe alkyle linéaire ou ramifié, comprenant de 1 à 10 atomes de carbone et, mieux encore, 1 ou 2 atomes de carbone ; et

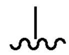

représente la liaison covalente par laquelle X est lié au reste du groupe de formule (a), (b), (c), (d), (e), (f) ou (g) ci-avant.

**4.** Matériau selon la revendication 3, dans lequel X représente un groupe de formule (II) dans laquelle $R^a$, $R^b$ et $R^c$ représentent tous trois un atome d'hydrogène.

**5.** Matériau selon la revendication 4, dans lequel le groupe polymérisable répond à la formule a) dans laquelle q va de 1 à 4.

**6.** Matériau selon l'une quelconque des revendications 1 à 5, dans lequel :

$R^1$ et $R^2$ représentent, indépendamment l'un de l'autre, un atome d'hydrogène, un groupe hydrocarboné, saturé ou insaturé, linéaire ou ramifié, comprenant de 1 à 12 atomes de carbone ; et
$R^3$ représente un groupe polymérisable.

**7.** Matériau selon la revendication 6, dans lequel :

$R^1$ et $R^2$ sont identiques entre eux et représentent un groupe alkyle linéaire ou ramifié, comprenant de 1 à 12 atomes de carbone et, mieux encore, de 1 à 6 atomes de carbone ; et
$R^4$ et $R^5$ représentent, indépendamment l'un de l'autre, un atome d'hydrogène ou un groupe alkyle linéaire ou ramifié, comprenant de 1 à 8 atomes de carbone et, mieux encore, de 1 à 4 atomes de carbone.

**8.** Matériau selon l'une quelconque des revendications 1 à 7, dans lequel l'agent réticulant est un dérivé polyvinylique du benzène ou du naphtalène, de préférence, le 1,4-divinylbenzène.

9. Matériau selon l'une quelconque des revendications 1 à 8, dans lequel la polymérisation réticulante du monomère est réalisée en présence d'un premier agent porogène qui est un solvant organique dans lequel sont solubles le monomère et l'agent réticulant, et d'un deuxième agent porogène qui est un polymère.

10. Matériau selon l'une quelconque des revendications 1 à 9, dans lequel le premier agent porogène est le toluène et le deuxième agent porogène est le polypropylène glycol.

11. Matériau selon l'une quelconque des revendications 1 à 10, dans lequel la polymérisation réticulante est une polymérisation en émulsion.

12. Utilisation d'un matériau organique mésoporeux selon l'une quelconque des revendications 1 à 11, pour extraire l'uranium(VI) d'un milieu aqueux comprenant de l'acide phosphorique et de l'uranium(VI).

13. Procédé de récupération de l'uranium(VI) présent dans un milieu aqueux comprenant de l'acide phosphorique, lequel procédé comprend :

a) une extraction de l'uranium(VI) du milieu aqueux par un matériau organique mésoporeux selon l'une quelconque des revendications 1 à 11, l'extraction comprenant une mise en contact du milieu aqueux avec le matériau, puis une séparation du milieu aqueux et du matériau ; et
b) une désextraction de l'uranium(VI) du matériau obtenu à l'issue de l'étape a), la désextraction comprenant la mise en contact du matériau avec une solution aqueuse acide ou basique, puis une séparation du matériau et de la solution aqueuse acide ou basique.

14. Utilisation selon la revendication 12 ou procédé selon la revendication 13, dans laquelle ou lequel le milieu aqueux comprend de 0,01 mol/L à 9 mol/L d'acide phosphorique.

15. Utilisation selon l'une quelconque des revendications 12 ou 14 ou procédé selon l'une quelconque des revendications 13 ou 14, dans laquelle ou lequel le milieu aqueux comprend de plus du fer.

16. Utilisation selon l'une quelconque des revendications 12, 14 ou 15 ou procédé selon l'une quelconque des revendications 13, 14 ou 15, dans laquelle ou lequel le milieu aqueux résulte de l'attaque d'un phosphate naturel par de l'acide sulfurique.

## Patentansprüche

1. Mesoporöses organisches Material, das durch vernetzende Polymerisation eines Monomers der folgenden Formel (I) erhältlich ist:

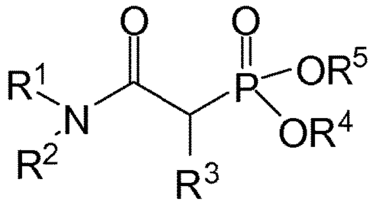
(I)

worin:

$R^1$, $R^2$ und $R^3$ unabhängig voneinander ein Wasserstoffatom, eine gesättigte oder ungesättigte, lineare oder verzweigte Kohlenwasserstoffgruppe mit 1 bis 12 Kohlenstoffatomen oder eine polymerisierbare Gruppe mit mindestens einer Ungesättigtheit darstellen, mit der Maßgabe, dass mindestens eines aus $R^1$, $R^2$ und $R^3$ eine polymerisierbare Gruppe mit mindestens einer Ungesättigtheit ist;
$R^4$ und $R^5$ unabhängig voneinander ein Wasserstoffatom oder eine gesättigte oder ungesättigte, lineare oder verzweigte Kohlenwasserstoffgruppe mit 1 bis 8 Kohlenstoffatomen darstellen;
wobei die vernetzende Polymerisation in Gegenwart eines Vernetzungsmittels und eines oder mehrerer Treibmittel durchgeführt wird.

**2.** Material nach Anspruch 1, wobei die Ungesättigtheit der polymerisierbaren Gruppe eine ethylenische Ungesättigtheit ist.

**3.** Material nach Anspruch 2, wobei die polymerisierbare Gruppe einer der folgenden Formeln (a), (b), (c), (d), (e), (f) und (g) entspricht:

$-(CH_2)_q-X$ (a)

$-(CH_2)_p-C(O)-O-(CH_2)_q-X$ (b)

$-(CH_2)_p-O-C(O)-(CH_2)_q-X$ (c)

$-(CH_2)_p-O-C(O)-NH-(CH_2)_q-X$ (d)

$-(CH_2)_p-O-(CH_2)_q-X$ (e)

$-(CH_2)_p-O-C_2H_5-(O-C_2H_5)_q-X$ (f)

$-(CH_2)_p$-Triazol-$(CH_2)_q-X$ (g)

wobei:

p eine ganze Zahl im Bereich von 1 bis 6 ist;
q eine ganze Zahl im Bereich von 0 bis 12 ist; und
X eine Gruppe der nachstehenden Formel (i) oder (ii) darstellt:

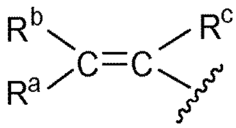
(i)

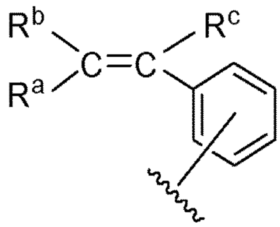
(ii)

worin:

$R^a$, $R^b$ et $R^c$ unabhängig voneinander ein Wasserstoffatom oder eine lineare oder verzweigte Alkylgruppe mit 1 bis 10 Kohlenstoffatomen und, noch besser, 1 oder 2 Kohlenstoffatomen darstellen; und

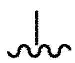

die kovalente Bindung darstellt, durch die X an den Rest der Gruppe der obigen Formel (a), (b), (c), (d), (e), (f) oder (g) gebunden ist.

**4.** Material nach Anspruch 3, wobei X eine Gruppe der Formel (II) darstellt, in der $R^a$, $R^b$ et $R^c$ alle drei ein Wasserstoffatom darstellen.

**5.** Material nach Anspruch 4, wobei die polymerisierbare Gruppe der Formel a) entspricht, worin q im Bereich von 1 bis 4 liegt.

**6.** Material nach einem der Ansprüche 1 bis 5, wobei:

$R^1$ und $R^2$ unabhängig voneinander ein Wasserstoffatom, eine gesättigte oder ungesättigte, lineare oder verzweigte Kohlenwasserstoffgruppe mit 1 bis 12 Kohlenstoffatomen darstellen; und
$R^3$ eine polymerisierbare Gruppe darstellt.

**7.** Material nach Anspruch 6, wobei:

$R^1$ und $R^2$ zueinander identisch sind und eine lineare oder verzweigte Alkylgruppe mit 1 bis 12 Kohlenstoffatomen und, noch besser, 1 bis 6 Kohlenstoffatomen darstellen; und
$R^4$ und $R^5$ unabhängig voneinander ein Wasserstoffatom oder eine lineare oder verzweigte Alkylgruppe mit 1 bis 8 Kohlenstoffatomen und, noch besser, 1 bis 4 Kohlenstoffatomen darstellen.

**8.** Material nach einem der Ansprüche 1 bis 7, wobei das Vernetzungsmittel ein Polyvinylbenzol- oder -naphthalinderivat, vorzugsweise 1,4-Divinylbenzol, ist.

**9.** Material nach einem der Ansprüche 1 bis 8, wobei die vernetzende Polymerisation des Monomers in Gegenwart eines ersten Treibmittels, das ein organisches Lösungsmittel ist, in dem das Monomer und das Vernetzungsmittel löslich sind, und eines zweiten Treibmittels, das ein Polymer ist, durchgeführt wird.

**10.** Material nach einem der Ansprüche 1 bis 9, wobei das erste Treibmittel Toluol und das zweite Treibmittel Polypropylenglykol ist.

**11.** Material nach einem der Ansprüche 1 bis 10, wobei die vernetzende Polymerisation eine Emulsionspolymerisation ist.

**12.** Verwendung eines mesoporösen organischen Materials nach einem der Ansprüche 1 bis 11 zur Extraktion von Uran(VI) aus einem wässrigen Medium, das Phosphorsäure und Uran(VI) enthält.

**13.** Verfahren zur Gewinnung von Uran(VI), das in einem Phosphorsäure enthaltenden wässrigen Medium vorhanden ist, wobei das Verfahren umfasst:

a) Extraktion von Uran(VI) aus dem wässrigen Medium mittels eines mesoporösen organischen Materials nach einem der Ansprüche 1 bis 11, wobei die Extraktion das Inkontaktbringen des wässrigen Mediums mit dem Material und dann das Trennen des wässrigen Mediums und des Materials umfasst; und
b) Rückextraktion von Uran(VI) aus dem in Schritt a) erhaltenen Material, wobei die Rückextraktion das Inkontaktbringen des Materials mit einer sauren oder basischen wässrigen Lösung und dann das Trennen des Materials und der sauren oder basischen wässrigen Lösung umfasst.

**14.** Verwendung nach Anspruch 12 oder Verfahren nach Anspruch 13, wobei das wässrige Medium 0,01 mol/L bis 9 mol/L Phosphorsäure enthält.

**15.** Verwendung nach einem der Ansprüche 12 oder 14 oder Verfahren nach einem der Ansprüche 13 oder 14, wobei das wässrige Medium ferner Eisen enthält.

**16.** Verwendung nach einem der Ansprüche 12, 14 oder 15 oder Verfahren nach einem der Ansprüche 13, 14 oder 15, wobei das wässrige Medium aus dem Angriff eines Rohphosphats mit Schwefelsäure resultiert.

## Claims

**1.** Mesoporous organic material obtainable by a cross-linking polymerisation of a monomer of formula (I) below:

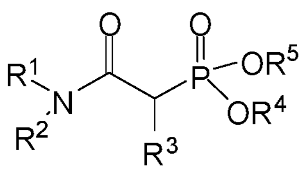

(I)

in which:

$R^1$, $R^2$ and $R^3$ represent, independently of each other, a hydrogen atom, a saturated or unsaturated, linear or branched hydrocarbon group comprising 1 to 12 carbon atoms or a polymerisable group comprising at least one unsaturation, provided that at least one of $R^1$, $R^2$ and $R^3$ is a polymerisable group comprising at least one unsaturation;
$R^4$ and $R^5$ represent, independently of each other, a hydrogen atom or a saturated or unsaturated, linear or

branched hydrocarbon group comprising 1 to 8 carbon atoms;
the cross-linking polymerisation being made in the presence of a cross-linking agent and one or several blowing agents.

**2.** Material according to claim 1, in which the unsaturation of the polymerisable group is an ethylene unsaturation.

**3.** Material according to claim 2, in which the polymerisable group complies with one of the formulas (a), (b), (c), (d), (e), (f) and (g) below:

$-(CH_2)_q-X$ (a)

$-(CH_2)_p-C(O)-O-(CH_2)_q-X$ (b)

$-(CH_2)_p-O-C(O)-(CH_2)_q-X$ (c)

$-(CH_2)_p-O-C(O)-NH-(CH_2)_q-X$ (d)

$-(CH_2)_p-O-(CH_2)_q-X$ (e)

$-(CH_2)_p-O-C_2H_5-(O-C_2H_5)_q-X$ (f)

$-(CH_2)_p$-triazole-$(CH_2)_q-X$ (g)

in which:

p is an integer varying from 1 to 6;
q is an integer varying from 0 to 12; and
X represents a group of formula (i) or (ii) below:

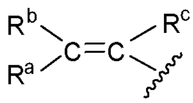
(i)

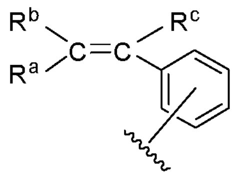
(ii)

in which:

$R^a$, $R^b$ and $R^c$ represent, independently of each other, a hydrogen atom or a linear or branched alkyl group comprising 1 to 10 carbon atoms and even better 1 or 2 carbon atoms; and

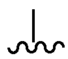

represents the covalent bond by which X is bonded to the rest of the group of formula (a), (b), (c), (d), (e), (f) or (g) above.

**4.** Material according to claim 3, in which X represents a group of formula (II) in which $R^a$, $R^b$ and $R^c$ all three represent a hydrogen atom.

**5.** Material according to claim 4, in which the polymerisable group complies with formula (a) in which q varies from 1 to 4.

**6.** Material according to any one of claims 1 to 5, in which:

$R^1$ and $R^2$ represent, independently of each other, a hydrogen atom, a saturated or unsaturated, linear or branched hydrocarbon group comprising 1 to 12 carbon atoms; and
$R^3$ represents a polymerisable group.

**7.** Material according to claim 6, in which:

$R^1$ and $R^2$ are identical to each other and represent a linear or branched alkyl group comprising 1 to 12 carbon atoms and even better 1 to 6 carbon atoms; and
$R^4$ and $R^5$ represent, independently of each other, a hydrogen atom or a linear or branched alkyl group comprising 1 to 8 carbon atoms and even better 1 to 4 carbon atoms.

**8.** Material according to any one of claims 1 to 7, in which the cross-linking agent is a polyvinyl derivative of benzene or of naphthalene, preferably 1,4-divinylbenzene.

**9.** Material according to any one of claims 1 to 8, in which the cross-linking polymerisation of the monomer is made in the presence of a first blowing agent that is an organic solvent in which the monomer and the cross-linking agent are soluble, and a second blowing agent which is a polymer.

**10.** Material according to any one of claims 1 to 9, in which the first blowing agent is toluene and the second blowing agent is polypropylene glycol.

**11.** Material according to any one of claims 1 to 10, in which the cross-linking polymerisation is an emulsion polymerisation.

**12.** Use of a mesoporous organic material according to any one of claims 1 to 11, to extract uranium(VI) from an aqueous medium comprising phosphoric acid and uranium(VI).

**13.** Method for recovering uranium(VI) present in an aqueous medium comprising phosphoric acid, which process comprises:

a) an extraction of uranium(VI) from the aqueous medium by a mesoporous organic material according to any one of claims 1 to 11, the extraction comprising contacting the aqueous medium with the material, and then separating the aqueous medium from the material; and
b) a stripping of uranium(VI) from the material at the end of step a), the stripping comprising contacting the material with an acid or basic aqueous solution, and then separating the material from the acid or basic aqueous solution.

**14.** Use according to claim 12 or method according to claim 13, in which the aqueous medium comprises 0.01 mol/L to 9 mol/L of phosphoric acid.

**15.** Use according to any one of claims 12 or 14 or method according to any one of claims 13 or 14, in which the aqueous medium further comprises iron.

**16.** Use according to any one of claims 12, 14 or 15 or method according to any one of claims 13, 14 or 15, in which the aqueous medium results from the attack of a natural phosphate by sulphuric acid.

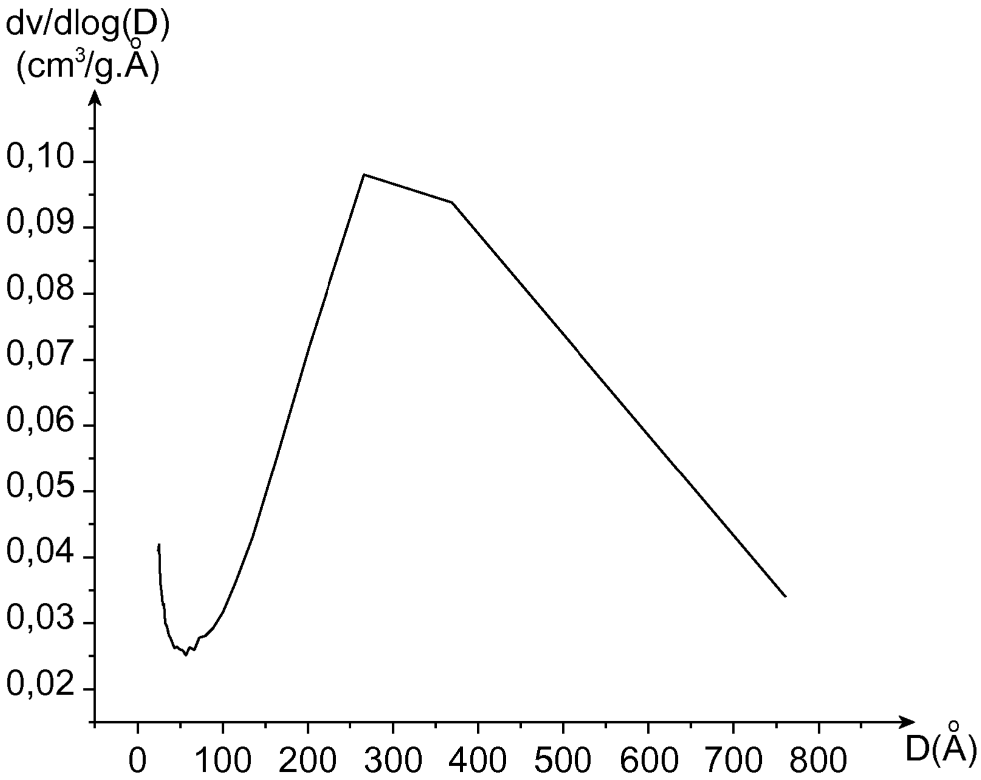
dv/dlog(D)
(cm3/g.Å)
0,10
0,09
0,08
0,07
0,06
0,05
0,04
0,03
0,02
0 100 200 300 400 500 600 700 800
D(Å)

FIG. 1

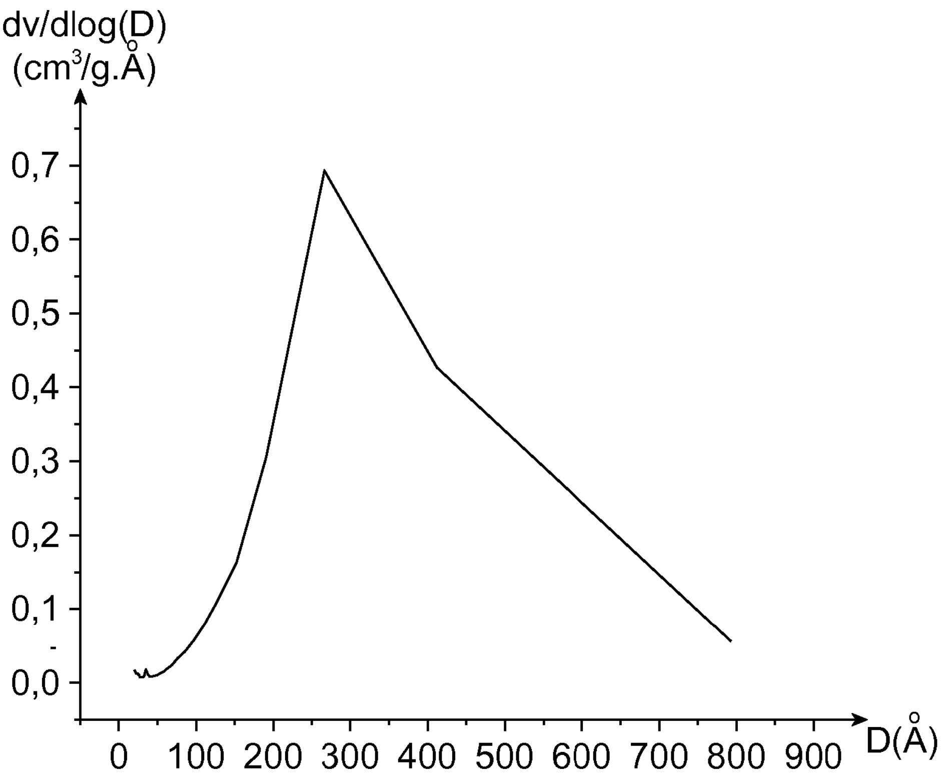
dv/dlog(D)
(cm3/g.Å)
0,7
0,6
0,5
0,4
0,3
0,2
0,1
0,0
0 100 200 300 400 500 600 700 800 900
D(Å)

FIG. 2

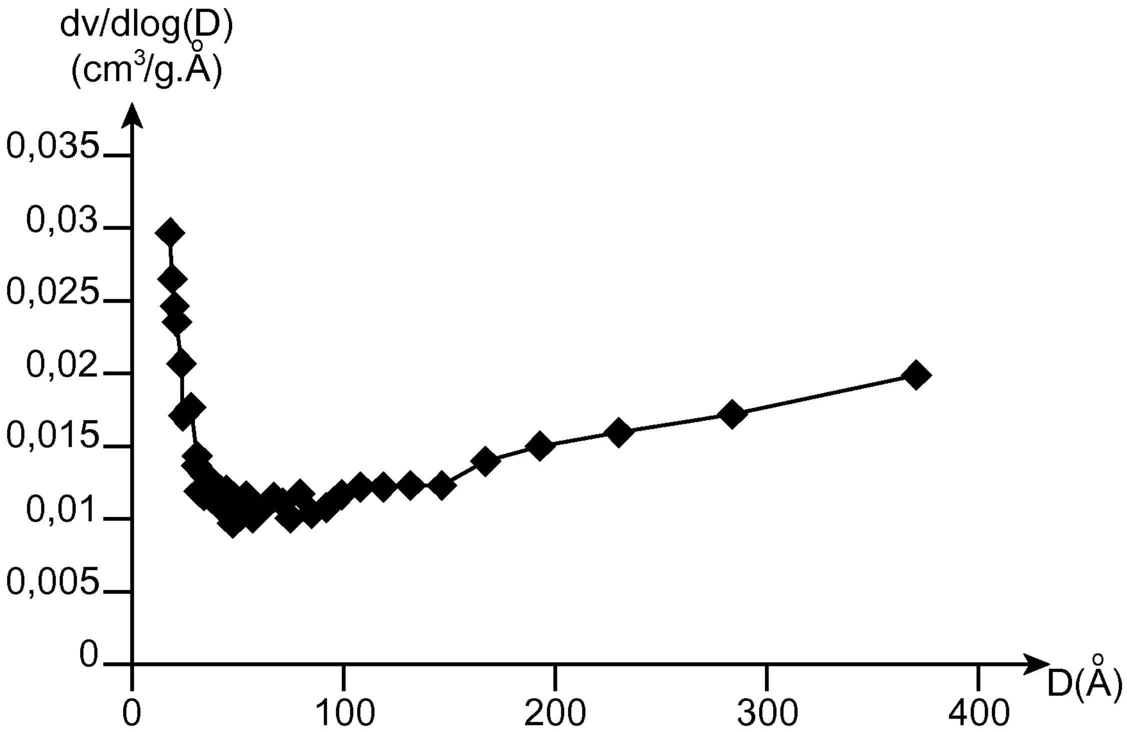
dv/dlog(D)
(cm3/g.Å)
0,035
0,03
0,025
0,02
0,015
0,01
0,005
0
0
100
200
300
400
D(Å)

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2014127860 A


### Littérature non-brevet citée dans la description


- **SIVA KESAVA RAJU et al.** *Journal of Hazarodus Materials,* 2007, vol. 145 (1-2), 315-322
- **YAMABE et al.** *Separation Science and Technology,* 2001, vol. 36 (15), 3511-3528
- **JYO et al.** *Journal of Applied Polymer Science,* 1997, vol. 63, 1327-1334
- **BARRETT ; JOYNER ; HALENDA.** *Journal of the American Chemical Society,* 1951, vol. 73 (1), 373-380